(19) Europäisches Patentamt
European Patent Office
Office européen des brevets

(11) **EP 3 416 210 B1**

(12) **EUROPEAN PATENT SPECIFICATION**

(45) Date of publication and mention
of the grant of the patent:
**02.12.2020 Bulletin 2020/49**

(51) Int Cl.:
***B23K 26/0622*** (2014.01)   ***H01M 2/14*** (2006.01)
***H01M 2/16*** (2006.01)

(21) Application number: **17175454.2**

(22) Date of filing: **12.06.2017**

(54) **METHOD FOR CUTTING A SEPARATOR FOIL, SEPARATOR FOIL AND BATTERY CELL**

VERFAHREN ZUM SCHNEIDEN EINER SEPARATORFOLIE UND BATTERIEZELLE

PROCÉDÉ DE DÉCOUPE D'UNE FEUILLE DE SÉPARATION, FEUILLE DE SÉPARATION ET CELLULE DE BATTERIE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**19.12.2018 Bulletin 2018/51**

(73) Proprietors:
• **Robert Bosch GmbH**
**70442 Stuttgart (DE)**
• **GS Yuasa International Ltd.**
**Kisshoin, Minami-ku,**
**Kyoto-shi, Kyoto 601-8520 (JP)**

(72) Inventors:
• **Scherner, Martin**
**96132 Schluesselfeld (DE)**
• **Proell, Johannes**
**96052 Bamberg (DE)**

(74) Representative: **Isarpatent**
**Patent- und Rechtsanwälte Behnisch Barth Charles**
**Hassa Peckmann & Partner mbB**
**Postfach 44 01 51**
**80750 München (DE)**

(56) References cited:
**WO-A1-2014/066832   DE-A1-102011 115 118**
**US-A1- 2009 081 512   US-A1- 2011 240 617**

## Description

The invention relates to a method for cutting a separator foil for an electrode assembly for a battery cell.

State of the Art

Electrical energy can be stored by means of batteries. Batteries change chemical energy into electrical energy. Particularly, rechargeable batteries are known that can be charged and discharged several times. Batteries or battery modules comprise several battery cells that are connected electrically in series or in parallel.

Especially, lithium ion battery cells are used in rechargeable batteries or battery systems. Lithium ion battery cells have a relatively high energy density. Lithium ion battery cells are used for instance in motor vehicles, in particular in electric vehicles (EV), in hybrid electric vehicles (HEV) and in plug-in hybrid vehicles (PHEV). Lithium ion battery cells may comprise one or more electrode assemblies.

Electrode assemblies have a positive electrode called cathode and a negative electrode called anode. The anode and the cathode are separated from one another by means of a separator. The electrodes of the battery cell can be formed like tapes and wound with interposition of the separator to form an electrode roll, also referred to as jelly-roll. Alternatively, the electrodes can be formed like sheets and layered with interposition of sheets of the separator to form an electrode stack.

Separators are known that contain a polymeric layer which is coated with a ceramic layer. Separator foils that are shaped like tapes are cut to sheets. Inter alia it is known to cut such separator foils by dint of laser beams, in particular in thermally-driven processes as well as in photochemical or photo-thermal processes.

Document DE 10 2009 022 678 A1 discloses an electrode assembly with a separator. The separator is formed as a composite material containing ceramic and polymer materials. In particular, the separator comprises a base layer formed of an organic material coated with an inorganic material.

Document US 2010/0025387 A1 discloses devices and methods for ultrashort pulse laser processing of transparent materials. Thereat, laser beams emitted by an ultrashort pulse laser are used for scribing, marking, welding and joining applications. The emitted laser beams that typically have a Gaussian fluence distribution are transformed into laser beams having a spatially uniform fluence distribution. Such a distribution is also known as "flat-top" or "top-hat" intensity distribution.

Document US 2008/0011852 A1 discloses a laser-based method and system for processing targeted surface material. The system includes a primary laser-subsystem including a primary laser source for generating a pulsed laser output. The shaped spot of the emitted laser beam may have a top-hat irradiance profile. The laser beam emitted from the laser source can be linear polarized. Whenever linear polarization is used, the direction of stage travel is aligned perpendicular to the polarization direction.

DE 10 2011 115 118 A1 describes a method for cutting thermoplastic plastic fibers as carrier material having sheet- or plate-shaped objects.

WO 2014/066832 A1 describes a method of fabricating an electrochemical device, by a laser light pattern generated by a laser beam incident on a diffractive optical element, the laser light pattern directly patterning at least an entire device in a single laser shot.

Disclosure of the Invention

The present invention provides a method for cutting a separator foil for an electrode assembly for a battery cell, as defined in independent claim 1.

The laser beam contains an electric field and a magnetic field that are orientated orthogonal to one another. Here, the electric field of the laser beam oscillates in a plane defined by the propagation direction and the vertical direction. The magnetic field of the laser beam oscillates in a plane defined by the propagation direction and a horizontal direction. Thereat, the propagation direction, the vertical direction and the horizontal direction are orientated orthogonal to one another.

The ultrashort pulse laser is a laser source that emits ultrashort pulses of light that have a pulse duration in regions of femtoseconds (fs) or picoseconds (ps). Preferably, the pulse duration of the ultrashort pulses of light of the laser beam is in a range between 80 femtoseconds and 100 picoseconds, in particular about 10 picoseconds.

The ultrashort pulse laser emits said ultrashort pulses of light periodically with an adjustable frequency. Preferably, the ultrashort pulses of light of the laser beam are emitted by the ultrashort pulse laser with a frequency in a range between 0,1 MHz and 2 MHz, in particular 1 MHz.

According to a wavelength of the ultrashort pulses of light, the laser beam is in an ultraviolet region, a visible region or in an infrared region. Said wavelength is specified in nanometres (nm). Preferably, the wavelength of the ultrashort pulses of light of the laser beam is in a range between 343 nanometres and 1300 nanometres, preferably 1030 nanometres. Ultrashort pulse lasers emitting such laser beams are becoming more and more important in industrial applications.

According to an advantageous embodiment of the invention, the laser beam is oriented such that the propagation direction, the vertical direction and the cutting direction are aligned within the same plane. Hence, effective intensity of the laser beam by cutting the separator foil is higher than for a circular polarized laser beam. Thus, cutting efficiency of the laser beam is improved and cutting speed is enhanced.

According to a preferred embodiment of the invention, the laser beam is oriented such that the propagation direction of the laser beam is aligned orthogonal to the cutting direction.

According to a preferred embodiment of the invention, the laser beam is also oriented such that the vertical direction of the laser beam is aligned parallel to the cutting direction.

According to the invention, a diffractive optical element is arranged between the ultrashort pulse laser and the separator foil such that the laser beam penetrates the diffractive optical element. The laser beam emitted by the ultrashort pulse laser has a Gaussian intensity distribution. By dint of the diffractive optical element, the intensity distribution of the laser beam can be transformed.

According to the invention, the diffractive optical element is designed such that the Gaussian intensity distribution of the laser beam is transformed into an at least almost uniform intensity distribution. In particular, the intensity distribution of the laser beam is transformed into a "top-hat" intensity distribution. Said uniform intensity distribution allows for cutting the ceramic layer of the separator foil almost equally to the polymer layer of the separator foil.

If the laser beam has a Gaussian intensity distribution, parts of the ceramic layer remain in the gap created by cutting the separator foil. Said effect occurs because the ablation threshold of the ceramic layer is higher than the ablation threshold of the polymer layer. Therefore, the intensity in edge areas of the laser beam is high enough to cut the polymer layer, but not high enough to cut the ceramic layer. The intensity in a central area of the laser beam is high enough to cut the ceramic layer.

If the laser beam has a uniform intensity distribution, there are only very small edge areas in which the intensity of the laser beam is high enough to cut the polymer layer, but not high enough to cut the ceramic layer. Hence, the amount of the ceramic layer remaining in the gap is reduced significantly and the gap cut into the separator foil is at least almost equal.

The focussing lens is shaped convex on one side and planar on the other side. The diffractive pattern is preferably integrated into the focussing lens. Also, the diffractive optical element with its micro-pattern can be separated from and arranged before the focussing lens.

The diffraction limited spot size is a physical parameter defining the smallest spot size of the laser beam that can be obtained. The diffraction limited spot size inter alia depends on the wavelength of the laser beam, a second diameter of the laser beam before entering the diffractive optical element and a working distance between the diffractive optical element and the separator foil.

Also, a separator foil is proposed which is produced using the method according to the invention.

Furthermore, a battery cell, particularly a lithium ion battery cell, is proposed that comprises at least one electrode assembly containing at least one separator foil which is produced using the method according to the invention.

A battery cell according to the invention is usable advantageously in particular in an electric vehicle (EV), in a hybrid electric vehicle (HEV), in a plug-in hybrid vehicle (PHEV), in a stationary battery or in a consumer product. Consumer products are inter alia mobile phones, tablets, notebooks or handheld computers. But also other applications are feasible.

Advantages of the Invention

The method according to the invention allows cutting separator foils containing a polymer layer and a ceramic layer by dint of a laser beam with relatively high speed. A laser beam consisting of ultrashort pulses of light causes less heat transfer to the phonon system of the separator foil than laser beam with continuous waves. Thereat, thermally induced shrinkage of the separator foils is reduced due to only small heat introduction from the laser beam into the separator foils during the cutting process. Thus, cutting efficiency is increased. Cutting gaps are smaller. Furthermore, relatively sharp cutting edges are obtained by cutting the separator foils and hence, tolerances of the separator foils that are cut to sheets are also reduced. Thus, integration of cut separator foils into electrode assemblies, in particular into electrode stacks, is simplified and improved. Thus, battery cells or other energy storage devices comprising such an electrode assembly with such an electrode foil have higher energy density in relation to their volume.

Brief Description of the Drawings

For a better understanding of the aforementioned embodiments of the invention as well as additional embodiments thereof, reference should be made to the description of embodiments below, in conjunction with the appended drawings showing:

Figure 1     a schematic view at a battery cell,

Figure 2     a schematic view at a linear polarized laser beam,

Figure 3     a schematic perspective view at a laser beam cutting a separator foil,

Figure 4     a schematic view at a laser beam penetrating a diffractive optical element,

Figure 4a     a Gaussian intensity distribution,

Figure 4b     a top-hat intensity distribution,

Figure 5a     a separator foil cut by a laser beam with Gaussian intensity distribution and

Figure 5b    a separator foil cut by a laser beam with top-hat intensity distribution.

Hereinafter, preferred embodiments of the present invention will be described with reference to the drawings. The drawings only provide schematic views of the invention. Like reference numerals refer to corresponding parts, elements or components throughout the figures, unless indicated otherwise.

Description of Embodiments

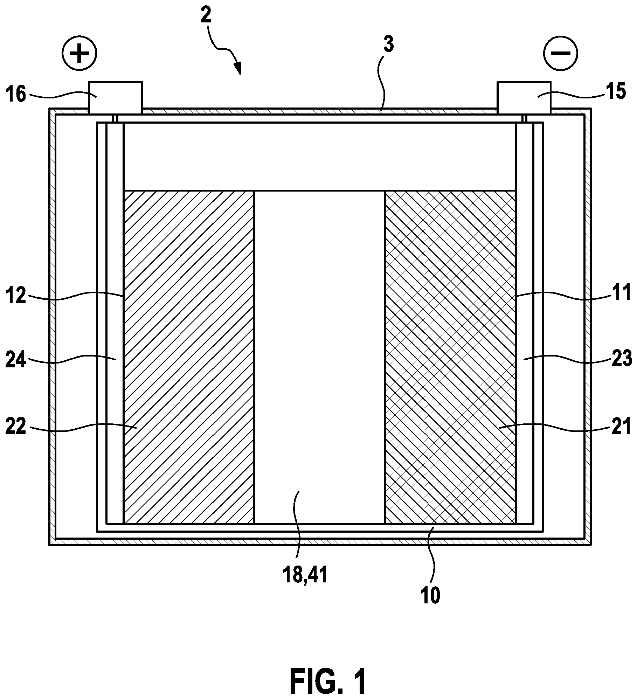

Figure 1 shows a schematic view at a battery cell 2. The battery cell 2 contains a housing 3 which is for example of pouch type and which has a prismatic shape. The battery cell 2 further contains an electrode assembly 10, which is arranged within the housing 3. The housing 3 is a for example bag or a pouch made of a soft material or can be a can made of a stiff material that surrounds the electrode assembly 10.

Furthermore, the battery cell 2 contains a negative terminal 15 and a positive terminal 16. The terminals 15, 16 serve for charging and discharging the battery cell 2. The terminals 15, 16 protrude from the housing 3.

The electrode assembly 10 contains an anode 11, a cathode 12 and a separator 18 that is arranged between the anode 11 and the cathode 12. Presently, the electrode assembly 10 is shaped as an electrode stack. That means the anode 11 and the cathode 12 of the electrode assembly 10 consist of several flat sheets that are stacked alternately to form a pile or a stack. The separator 18 also consists of several flat sheets that are stacked between the sheets of the anode 11 and the sheets of the cathode 12. Said sheets are separator foils 41 that are cut from separator foils 41 shaped like tapes.

The anode 11 contains an anode composite material 21 and an anode current collector 23. The anode composite material 21 and the anode current collector 23 are attached to one another. The anode current collector 23 is electrically conductive and is made of a metal, in particular of copper. The anode current collector 23 is electrically connected to the negative terminal 15 of the battery cell 2. The anode composite material 21 presently contains graphite as active material.

The cathode 12 contains a cathode composite material 22 and a cathode current collector 24. The cathode composite material 22 and the cathode current collector 24 are attached to one another. The cathode current collector 24 is electrically conductive and is made of a metal, in particular of aluminium. The cathode current collector 24 is electrically connected to the positive terminal 16 of the battery cell 2. The cathode composite material 22 presently contains lithiated metal oxide as active material.

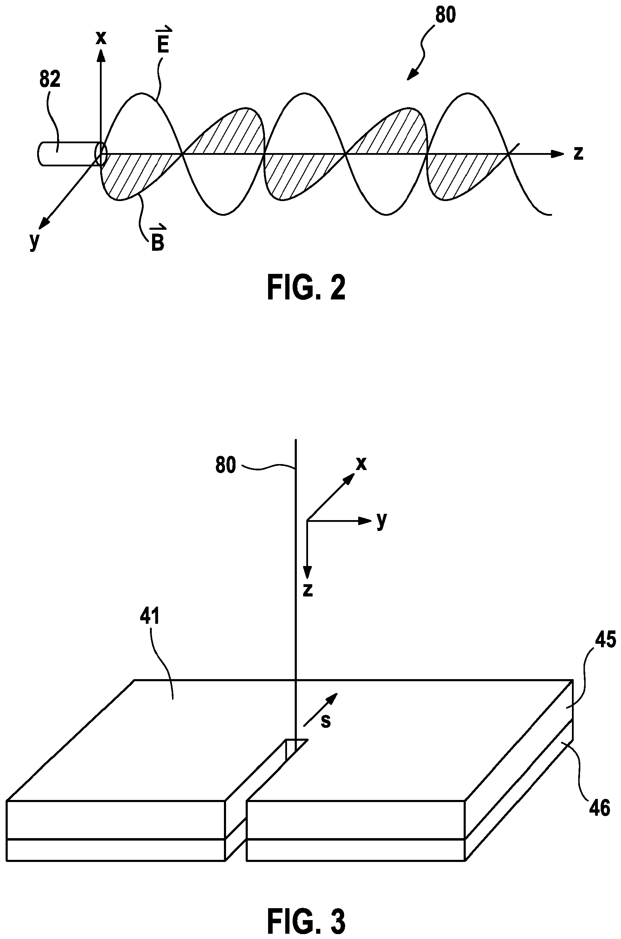

Figure 2 shows a schematic view at a linear polarized laser beam 80. The laser beam 80 is emitted by an ultrashort pulse laser 82 and hence consists of ultrashort pulses of light. The laser beam 80 propagates in a propagation direction z. A vertical direction x is oriented orthogonal to the propagation direction z. A horizontal direction y is orientated orthogonal to the propagation direction z and to the vertical direction x. Thus, the propagation direction z, the vertical direction x and the horizontal direction y are orientated orthogonal to one another.

The linear polarized laser beam 80 contains an electric field E that oscillates in a plane defined by the propagation direction z and the vertical direction x. The linear polarized laser beam 80 also contains a magnetic field B that oscillates in a plane defined by the propagation direction z and the horizontal direction y. Hence, the electric field E and the magnetic field B of the laser beam 80 are orientated orthogonal to one another.

Figure 3 shows a schematic perspective view at the laser beam 80 cutting a separator foil 41. The separator foil 41 contains a polymer layer 45 and a ceramic layer 46 that is coated onto the polymer layer 45. The thickness of the separator foil 41 is about 12 micrometres ($\mu$m) to 30 micrometres whereby the ceramic layer 46 has a thickness of about 1 $\mu$m to 5 $\mu$m. Thereby, the laser beam 80 is directed onto the separator foil 41 and is moved along the separator foil 41 in a cutting direction s.

The laser beam 80 is directed onto the polymer layer 45 of the separator foil 41. Thereat, the laser beam 80 cuts the polymer layer 45 and the ceramic layer 46. The propagation direction z in which the laser beam 80 propagates is oriented orthogonal to a surface of the separator foil 41. Hence, the laser beam 80 is oriented such that the propagation direction z is aligned orthogonal to the cutting direction s.

Furthermore, the laser beam 80 is also oriented such that the vertical direction x is aligned parallel to the cutting direction s. In particular, the laser beam 80 is oriented such that the propagation direction z, the vertical direction x and the cutting direction s are aligned within the same plane. The horizontal direction y is orientated orthogonal to said plane.

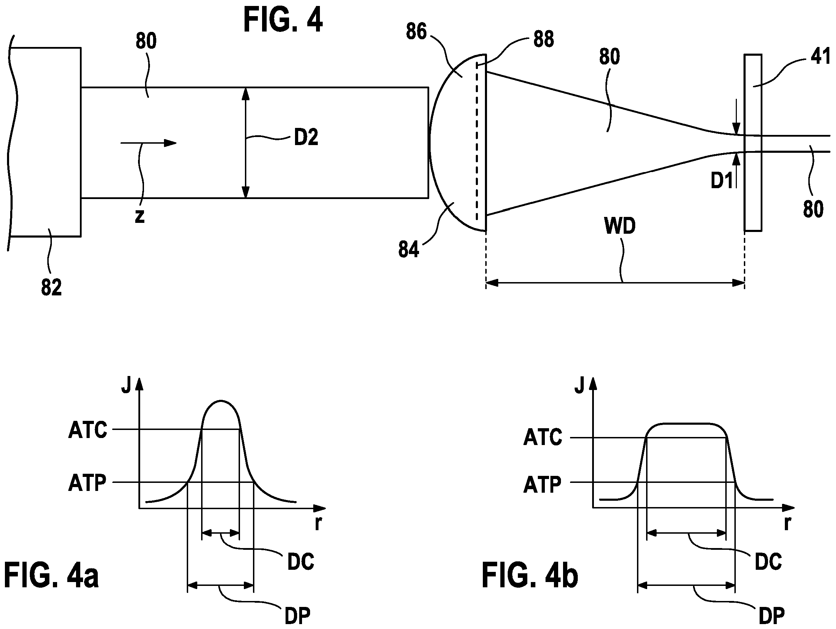

Figure 4 shows a schematic view at a laser beam 80 penetrating a diffractive optical element 84. The diffractive optical element 84 is arranged between the ultrashort pulse laser 82 and the separator foil 41. The diffractive optical element 84 includes a focussing lens 86 and a diffractive pattern 88. Thereat, the focussing lens 86 is shaped convex on one side and planar on the other side. The diffractive pattern 88 is integrated into the focussing lens 86 but could also be set-up as a separate optical element with defined micro-structure arranged before a separately arranged focussing lens. The diffractive optical element 84 is arranged such that the laser beam 80 enters the convex side and exits the planar side. A distance between the diffractive optical element 84 and the separator foil 41 is named a working distance WD.

The propagation direction z of the laser beam 80 is orientated orthogonal to the planar side of the diffractive optical element 84. In the diffractive optical element 84, the laser beam 80 is diffracted. Thereat, a diameter of the laser beam 80 is shrinking. Hence, a first diameter D1 of the laser beam 80 on the surface of the separator foil 41 is smaller than a second diameter D2 of the laser beam 80 before entering the diffractive optical element 84, respectively before entering the focussing lens 86.

The first diameter D1 of the laser beam 80 on the surface of the separator foil 41 is presently about 3 to 5 times of a diffraction limited spot size DO of the laser beam 80 itself. The diffraction limited spot size DO is presently in a range of 10 micrometres to 50 micrometres. In particular, the first diameter D1 of the laser beam 80 on the surface of the separator foil 41 is about 30-250 micrometres.

The diffraction limited spot size DO is a physical parameter defining the smallest spot size of the laser beam 80 that can be obtained. The diffraction limited spot size DO depends on a wavelength A of the laser beam 80, the second diameter D2 of the laser beam 80, the working distance WD and a constant factor $M^2$ which is greater than 1. The diffraction limited spot size DO can be calculated by the following formula:

$$D0 = ( 4 * WD * \lambda * M^2 ) / ( \pi * D2 )$$

The diffractive optical element 84 serves for transforming an intensity J distribution of the laser beam 80. When emitted by the ultrashort pulse laser 82, the laser beam 80 has a Gaussian intensity J distribution. Said Gaussian distribution of the intensity J of the laser beam 80 depends on a radial distance r from a centre of the laser beam 80. A typical Gaussian intensity J distribution of the laser beam 80 is given in figure 4a.

Figure 4a further shows a ceramic ablation threshold ATC. The ceramic layer 46 of the separator foil 41 is cut when the intensity J of the laser beam 80 is greater than the ceramic ablation threshold ATC. Hence, a gap is cut into the ceramic layer 46 with a ceramic gap diameter DC. Figure 4a also shows a polymer ablation threshold ATP. The polymer layer 45 of the separator foil 41 is cut when the intensity J of the laser beam 80 is greater than the polymer ablation threshold ATP. Hence, a gap is cut into the polymer layer 45 by the laser beam 80 with a polymer gap diameter DP.

Within the diffractive optical element 84, the Gaussian intensity J distribution of the laser beam 80 is transformed into a top-hat intensity J distribution. A typical top-hat distribution of the intensity J of the laser beam 80 depending on the radial distance r from the centre of the laser beam 80 is given in figure 4b. Said top-hat intensity J distribution is an at least almost uniform intensity J distribution. In particular, the laser beam 80 has said almost uniform intensity J distribution when cutting the separator foil 41.

Figure 4b also shows the ceramic ablation threshold ATC, the ceramic gap diameter DC, polymer ablation threshold ATP and the polymer gap diameter DP. The ablation thresholds ATC and ATP are material depending and therefor constant. However, the difference between the polymer gap diameter DP and the ceramic gap diameter DC is significantly smaller in figure 4b showing the almost uniform intensity J distribution.

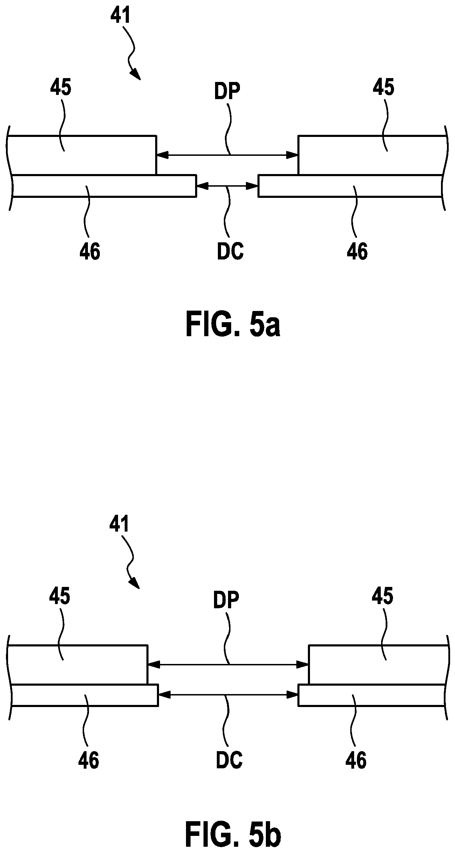

Figure 5a shows a separator foil 41 cut by a laser beam 80 with Gaussian intensity J distribution according to figure 4a and with a diffraction limited spot size DO of about 10 micrometres to 50 micrometres. The resulting polymer gap diameter DP can be about 50 to 60 micrometres which approximately corresponds to the diffraction limited spot size D0 of the laser beam 80. Thereat, in general possible wider polymer gap diameters DP and ceramic gap diameter DC resulting from heat accumulation effects due to high laser frequencies of up to 2 MHz are neglected.

The ceramic gap diameter DC is significantly smaller due to differences between the ceramic ablation threshold ATC and the polymer ablation threshold ATP. Hence, the difference between the polymer gap diameter DP and the ceramic gap diameter DC is significantly large.

Figure 5b shows a separator foil 41 cut by a laser beam 80 with top-hat intensity J distribution according to figure 4b and with a diffraction limited spot size D0 of about 10 micrometres to 50 micrometres. The resulting polymer gap diameter DP is about 30 micrometres to 250 micrometres which is approximately 3 to 5 times as large as the diffraction limited spot size DO of the laser beam 80. Thereat, in general possible wider polymer gap diameters DP and ceramic gap diameter DC resulting from heat accumulation effects due to high laser frequencies of up to 2 MHz are neglected. Nevertheless, the ceramic gap diameter DC is only insignificantly larger. Hence, the difference between the polymer gap diameter DP and the ceramic gap diameter DC is significantly small.

The foregoing description, for purpose of explanation, has been described with reference to specific embodiments. However, the illustrative discussions above are not intended to be exhaustive or to limit the invention to the precise forms disclosed. Many modifications and variations are possible in view of the above teachings and those encompassed by the attached claims. The embodiments were chosen and described in order to explain the principles of the invention and its practical applications, to thereby enable others skilled in the art to utilize the invention and various embodiments with various modifications as are suited to the particular use contemplated.

**Claims**

1. Method for cutting a separator foil (41)
   for an electrode assembly (10) for a battery cell (2),

the separator foil (41) containing
a polymer layer (45) and a ceramic layer (46) whereat
the ablation threshold of the ceramic layer (46) is
higher than that of the polymer layer (45),
by dint of a laser beam (80),
the laser beam (80) being emitted by an ultrashort
pulse laser (82) and consisting of ultrashort pulses
of light, whereat
the laser beam (80) propagates in a propagation direction (z) and
is linear polarized in a vertical direction (x), and
whereat the laser beam (80) is directed onto the polymer layer (45) on the ceramic layer (46) of the separator foil (41) and
is moved along the separator foil (41) in a cutting
direction (s), **characterized in that**
a diffractive optical element (84) is arranged between
the ultrashort pulse laser (82) and the separator foil
(41),
the diffractive optical element (84) includes a focussing lens (86) and a diffractive pattern (88), whereat
the focussing lens (86) is shaped convex on one side
to the ultrashort pulse laser (82) and planar on the
other side to the separator foil (41), and
the diffractive optical element (84) is designed such
that a Gaussian intensity distribution of the laser
beam (80) is transformed into a top-hat intensity distribution whereat the intensity of the top-hat intensity
distribution is higher than the ablation threshold of
the ceramic layer (46) and the transformed laser
beam (80) is directed onto the polymer layer (45)
whereat the laser beam (80) is diffracted and a diameter of the laser beam (80) is shrinking so that a
first diameter (D1) of the laser beam (80) on the surface of the polymer layer (45) is smaller than a second diameter (D2) of the laser beam (80) before entering the focussing lens (86) and the first diameter
(D1) of the laser beam (80) on the surface of the
separator foil (41) is in a range between 3 times and
5 times of a diffraction limited spot size (D0).

2. Method according to claim 1, whereat
a pulse duration of the ultrashort pulses of light of
the laser beam (80) is in a range between 80 fs and
100 ps.

3. Method according to one of the preceding claims,
whereat
the ultrashort pulses of light of the laser beam (80)
are emitted by the ultrashort pulse laser (82) with a
frequency in a range between 0,1 MHz and 2 MHz.

4. Method according to one of the preceding claims,
whereat
a wavelength (λ) of the ultrashort pulses of light of
the laser beam (80) is in a range between 343 nm
and 1300 nm.

5. Method according to one of the preceding claims,
whereat
the laser beam (80) is oriented such that
the propagation direction (z), the vertical direction
(x) and the cutting direction (s) are aligned within the
same plane.

6. Method according to one of the preceding claims,
whereat
the laser beam (80) is oriented such that
the propagation direction (z) is aligned orthogonal to
the cutting direction (s).

7. Method according to one of the preceding claims,
whereat
the laser beam (80) is oriented such that
the vertical direction (x) is aligned parallel to
the cutting direction (s).

8. Separator foil (41) for an electrode assembly (10) for
a battery cell (2),
cut using the method according to one of the preceding claims.

9. Battery cell (2), comprising at least one electrode
assembly (10) containing at least one separator foil
(41) produced using the method according to one of
claims 1 to 7.

10. Usage of a battery cell (2) according to claim 9 n an
electric vehicle (EV), in a hybrid electric vehicle
(HEV), in a plug-in hybrid vehicle (PHEV), in a stationary battery or in a consumer product.

**Patentansprüche**

1. Verfahren zum Schneiden einer Trennfolie (41) für
eine Elektrodenbaugruppe (10) für eine Batteriezelle
(2), wobei die Trennfolie (41) eine Polymerschicht
(45) und eine keramische Schicht (46) enthält, wobei
die Ablationsschwelle der keramischen Schicht (46)
höher als die der Polymerschicht (45) ist, mit Hilfe
eines Laserstrahls (80), wobei der Laserstrahl (80)
durch einen Ultrakurz-Impulslaser (82) emittiert wird
und aus ultrakurzen Lichtimpulsen besteht, wobei
sich der Laserstrahl (80) in einer Ausbreitungsrichtung (z) ausbreitet und in einer vertikalen Richtung
(x) linear polarisiert ist und wobei
der Laserstrahl (80) auf die Polymerschicht (45) auf
der keramischen Schicht (46) der Trennfolie (41) gerichtet wird und entlang der Trennfolie (41) in einer
Schneidrichtung (s) bewegt wird,
**dadurch gekennzeichnet, dass**
ein beugendes optisches Element (84) zwischen
dem Ultrakurz-Impulslaser (82) und der Trennfolie
(41) angeordnet ist,
das beugende optische Element (84) eine Fokussierungslinse (86) und ein Beugungsmuster (88) umfasst, wobei die Fokussierungslinse (86) auf einer Seite des Ultrakurz-Impulslasers (82) konvex und auf der anderen Seite der Trennfolie (41) planar geformt ist, und

das beugende optische Element (84) so ausgelegt ist, dass eine Gaußsche Intensitätsverteilung des Laserstrahls (80) in eine Zylinderhut-Intensitätsverteilung transformiert wird, wobei die Intensität der Zylinderhut-Intensitätsverteilung höher als die Ablationsschwelle der keramischen Schicht (46) ist und der transformierte Laserstrahl (80) auf die Polymerschicht (45) gerichtet wird, wobei der Laserstrahl (80) gebeugt und ein Durchmesser des Laserstrahls (80) geschrumpft wird, so dass ein erster Durchmesser (D1) des Laserstrahls (80) auf der Oberfläche der Polymerschicht (45) kleiner als ein zweiter Durchmesser (D2) des Laserstrahls (80) vor dem Eintritt in die Fokussierungslinse (86) ist und der erste Durchmesser (D1) des Laserstrahls (80) auf der Oberfläche der Trennfolie (41) in einem Bereich zwischen dreimal und fünfmal einer beugungsbegrenzten Fleckgröße (D0) liegt.

2. Verfahren nach Anspruch 1, wobei eine Impulsdauer der ultrakurzen Lichtimpulse des Laserstrahls (80) in einem Bereich zwischen 80 fs und 100 ps liegt.

3. Verfahren nach einem der vorhergehenden Ansprüche, wobei die ultrakurzen Lichtimpulse des Laserstrahls (80) durch den Ultrakurz-Impulslaser (82) mit einer Frequenz im Bereich zwischen 0,1 MHz und 2 MHz emittiert werden.

4. Verfahren nach einem der vorhergehenden Ansprüche, wobei eine Wellenlänge ($\lambda$) der ultrakurzen Lichtimpulse des Laserstrahls (80) in einem Bereich zwischen 343 nm und 1300 nm liegt.

5. Verfahren nach einem der vorhergehenden Ansprüche, wobei der Laserstrahl (80) so orientiert ist, dass die Ausbreitungsrichtung (z) die vertikale Richtung (x) und die Schneidrichtung (s) in derselben Ebene ausgerichtet sind.

6. Verfahren nach einem der vorhergehenden Ansprüche, wobei der Laserstrahl (80) so orientiert ist, dass die Ausbreitungsrichtung (z) orthogonal zu der Schneidrichtung (s) ausgerichtet ist.

7. Verfahren nach einem der vorhergehenden Ansprüche, wobei der Laserstrahl (80) so orientiert ist, dass die vertikale Richtung (x) parallel zu der Schneidrichtung (s) ausgerichtet ist.

8. Trennfolie (41) für eine Elektrodenbaugruppe (10) für eine Batteriezelle (2), die unter Verwendung des Verfahrens nach einem der vorhergehenden Ansprüche geschnitten wird.

9. Batteriezelle (2), die mindestens eine Elektrodenbaugruppe (10) umfasst, die mindestens eine unter Verwendung des Verfahrens nach einem der Ansprüche 1 bis 7 produzierte Trennfolie (41) enthält.

10. Gebrauch einer Batteriezelle (2) nach Anspruch 9 in einem Elektrofahrzeug (EV), in einem Hybridelektrofahrzeug (HEV), in einem Plug-In-Hybridfahrzeug (PHEV), in einer stationären Batterie oder in einem Verbraucherprodukt.

**Revendications**

1. Procédé de découpe d'une feuille de séparation (41) pour un ensemble d'électrodes (10) pour une cellule de batterie (2), la feuille de séparation (41) contenant une couche de polymère (45) et une couche de céramique (46), le seuil d'ablation de la couche de céramique (46) étant supérieur à celui de la couche de polymère (45), par un faisceau laser (80),

le faisceau laser (80) étant émis par un laser à impulsions ultracourtes (82) et consistant en des impulsions de lumière ultracourtes,

le faisceau laser (80) se propageant dans une direction de propagation (z) et étant polarisé linéairement dans une direction verticale (x), et

le faisceau laser (80) étant dirigé sur la couche de polymère (45) de la couche céramique (46) de la feuille de séparation (41) et étant déplacé le long de la feuille de séparation (41) dans une direction de coupe (s),

**caractérisé en ce que**

un élément optique diffractif (84) est agencé entre le laser à impulsions ultracourtes (82) et la feuille de séparation (41), l'élément optique diffractif (84) comprenant une lentille de focalisation (86) et un motif diffractif (88), la lentille de focalisation (86) étant de forme convexe d'un côté par rapport au laser à impulsions ultracourtes (82) et plane de l'autre côté par rapport à la feuille de séparation (41), et

l'élément optique diffractif (84) étant conçu de telle sorte qu'une distribution gaussienne de l'intensité du faisceau laser (80) est transformée en une distribution de l'intensité de type chapeau haut de forme l'intensité de la distribution de l'intensité de type chapeau haut de forme étant supérieure au seuil d'ablation de la couche céramique (46) et le faisceau laser transformé (80) étant dirigé sur la couche polymère (45) le faisceau laser (80) étant diffracté et un diamètre du faisceau laser (80) rétrécissant de sorte qu'un premier diamètre (D1) du faisceau laser (80) sur la surface de la couche de polymère (45) est inférieure à un deuxième diamètre (D2) du faisceau laser (80) avant son entrée dans la lentille de focalisation (86) et le premier diamètre (D1) du faisceau laser (80) sur la surface de la feuille de séparation (41) est compris entre 3 fois et 5 fois la taille d'un spot limité par diffraction (D0).

2. Procédé selon la revendication 1,
   la durée des impulsions ultracourtes du faisceau laser (80) se situe dans une plage comprise entre 80 fs et 100 ps.

3. Procédé selon l'une des revendications précédentes,
   les impulsions de lumière ultracourtes du faisceau laser (80) étant émises par le laser à impulsions ultracourtes (82) avec une fréquence comprise entre 0,1 MHz et 2 MHz.

4. Procédé selon l'une des revendications précédentes,
   une longueur d'onde (À) des impulsions ultracourtes de lumière du faisceau laser (80) étant dans une plage comprise entre 343 nm et 1300 nm.

5. Procédé selon l'une des revendications précédentes,
   le faisceau laser (80) étant orienté de telle sorte que la direction de propagation (z), la direction verticale (x) et la direction de coupe (s) sont alignées dans le même plan.

6. Procédé selon l'une des revendications précédentes,
   le faisceau laser (80) étant orienté de telle sorte que la direction de propagation (z) est orthogonale à la direction de coupe (s).

7. Procédé selon l'une des revendications précédentes,
   le faisceau laser (80) étant orienté de telle sorte que la direction verticale (x) est parallèle à la direction de coupe (s).

8. Feuille de séparation (41) pour un ensemble d'électrodes (10) pour une cellule de batterie (2), découpée en utilisant le procédé selon l'une des revendications précédentes.

9. Élément de batterie (2), comprenant au moins un ensemble d'électrodes (10) contenant au moins une feuille de séparation (41), fabriqué selon le procédé selon l'une des revendications 1 à 7.

10. Utilisation d'une cellule de batterie (2) selon la revendication 9, dans un véhicule électrique (EV), dans un véhicule électrique hybride (HEV), dans un véhicule hybride rechargeable (PHEV), dans une batterie stationnaire ou dans un produit de consommation.

**FIG. 1**

**FIG. 2**

**FIG. 3**

FIG. 4

FIG. 4a

FIG. 4b

FIG. 5a

FIG. 5b

**REFERENCES CITED IN THE DESCRIPTION**

**Patent documents cited in the description**

- DE 102009022678 A1
- US 20100025387 A1
- US 20080011852 A1
- DE 102011115118 A1
- WO 2014066832 A1